# EUROPEAN PATENT SPECIFICATION

(11) **EP 3 227 568 B1**
(45) Date of publication and mention of the grant of the patent: **21.10.2020**
(21) Application number: 15818108.1
(22) Date of filing: 01.12.2015
(51) Int. Cl.: F16B 11/00, B29C 65/48, B29C 65/36, B29L 31/30, B29C 65/50

(54) **COUPLING COMPONENTS TO ONE ANOTHER UTILIZING ELECTROMAGNETIC ENERGY**
ANEINANDERKUPPLUNG VON KOMPONENTEN MITHILFE ELEKTROMAGNETISCHER ENERGIE
ACCOUPLEMENT D'ÉLÉMENTS L'UN À L'AUTRE À L'AIDE DE L'ÉNERGIE ÉLECTROMAGNÉTIQUE

(30) Priority: 01.12.2014 US 201414557404
(43) Date of publication of application: 11.10.2017
(73) Proprietor: Raytheon Company, Waltham, MA 02451 (US)
(72) Inventor: CARLSTEN, Curtis B., Waltham, Massachusetts 02451 (US); ITEM, Erik F., Waltham, Massachusetts 02451 (US)
(74) Representative: Dentons UK and Middle East LLP
(86) International application number: PCT/US2015/063256
(87) International publication number: WO 2016/089909

(56) References cited:
- DE-A1- 4 214 279
- GB-A- 2 032 877
- GB-A- 2 187 703
- US-A- 4 132 331
- US-A1- 2008 302 476

## Description

### BACKGROUND

The coupling of two or more components to one another is a common occurrence in the manufacture and assembly of many devices. Traditional coupling hardware, such as various types of fasteners, is regularly used for such purposes. In some cases, metal or plastic components are "welded" to one another. In cases where an assembly must be waterproof or airtight, traditional joint seals, such as O-rings, are used to seal junctions of coupled components.

US2008/0302476 provides a bonding method for a filtration unit for bonding a polymeric end cap to a porous filter element body and includes providing a polymeric end cap of a filtration unit, providing a porous filter element body and positioning a hot melt adhesive element and a metal element between the porous filter element body and the end cap. A pressure is applied between the porous filter element body and the end cap and an electromagnetic field is induced at the metal element. The hot melt adhesive is melted and flows between the end cap and the porous filter element body and a bond is formed between the porous filter element body and the end cap.

US4132331 provides a collapsible packaging tube in which the head and tube pipe are separately made at least partially of plastic material and in which a connecting partially plastic body overlaps and is welded to peripheral edges of the head and pipe. The tube pipe and connecting body have isolated metallic barriers. Process for making such a tube is also disclosed.

GB2032877 provides an all-plastic drum of selected capacity comprising in combination an extruded tube defining the drum side walls of selected diameter and length proportional to the drum capacity desired and having an open upper end and an open bottom end an injection molded bottom closure assembled to the bottom end of the tube and defining a cavity therebetween, the bottom closure being welded to and closing the bottom end; and the weld between the bottom closure and the bottom end being defined by a meltable welding material disposed in the cavity that was induction-heated and melted.

DE4214279 provides a connector with a flange at one end with connections for heating wire and at other opposite end has stop flange on inner wall. The sleeve and flanges are initially thin, wrapped with wire coil and then encased with material to desired wall thickness. To join pipes connector is placed in pipe socket and then the other pref. conical, pipe end is pushed into the connector. A welding current is passed through heating wire for predetermined amt. of time.

GB2187 703 provides a process for filling and sealing a vessel which is formed of starch or at least one other hydrophilic material, or a mixture of compounds of this nature, and which comprises a container part and a closure part, the container part and closure part being capable of cooperating along respective mating areas to provide a non-locking mating free of any snap-lock, the filling and sealing process comprising (a) introducing a product constituting the filling into the container part of the vessel; (b) bringing a sealing liquid into contact with the whole or a portion of that mating area of the closure part which touches the mating area of the container part when the vessel is in the closed state, and/orwith the whole or a portion of that mating area of the container part which touches the mating area of the closure part when the vessel is in the closed state; and (c) subsequently uniting the container part and the closure part in order to form the sealed vessel.

### Summary of Invention

One aspect of the present invention provides a method of coupling components utilizing electromagnetic energy, comprising: obtaining a first component having a first coupling portion comprising a first tapered surface; obtaining a second component having a second coupling portion configured to interface with the first coupling portion, and comprising a second tapered surface; disposing a susceptor and hot melt adhesive combination on at least one of the first or second tapered surfaces of the first and second coupling portions, the susceptor and hot melt adhesive combination comprising a susceptor disposed between a first hot melt adhesive layer and a second hot melt adhesive layer; mating the first and second coupling portions such that the susceptor and hot melt adhesive combination is disposed between the first and second coupling portions; and such that a portion of each of the first and second coupling portions are in direct contact with each other; and applying electromagnetic energy to the susceptor, wherein the susceptor converts the electromagnetic energy to heat, which melts the first and second hot melt adhesive layers into contact with the first and second coupling portions to couple the first and second components to one another upon solidification of the first and second hot melt adhesive layers; wherein the first coupling portion comprises an opening and the second coupling portion comprises a protrusion; wherein the opening and the protrusion are tapered to generate axial compression between the first and second coupling portions; and wherein the opening and the protrusion are configured as conical sections.

A second aspect of the present invention provides a component assembly, comprising: a first component having a first coupling portion comprising a first tapered surface; a second component having a second coupling portion configured to interface with the first coupling portion for coupling the first and second components to one another, and comprising a second tapered surface; a susceptor and hot melt adhesive combination disposed between the first and second tapered surfaces of the first and second coupling portions, the susceptor and hot melt adhesive combination comprising a susceptor disposed between a first hot melt adhesive layer and a second hot melt adhesive layer, the first and second coupling portions configured to mate such that the susceptor and hot melt adhesive combination is disposed between the first and second coupling portions; and such that at least a portion of each of the first and second coupling portions are in direct contact with each other; and wherein the susceptor is configured to convert electromagnetic energy to heat, to melt the first and second hot melt adhesive layers to couple the first and second components to one another upon solidification of the first and second hot melt adhesive layers; wherein the first coupling portion comprises an opening and the second coupling portion comprises a protrusion; wherein the opening and the protrusion are tapered; and wherein the opening and the protrusion are configured as conical sections.

### BRIEF DESCRIPTION OF THE DRAWINGS

Features and advantages of the invention will be apparent from the detailed description which follows, taken in conjunction with the accompanying drawings, which together illustrate, by way of example, features of the invention; and, wherein:
FIG. 1 is an illustration of a component assembly in accordance with an example of the present disclosure.
FIG. 2 is a schematic cross-sectional view of a coupling of two components of a component assembly in accordance with an example of the present disclosure.
FIG. 3 is an exploded detail view of the coupling of two components of FIG. 2.
FIG. 4A is an illustration of a susceptor configuration in accordance with an example of the present disclosure.
FIG. 4B is an illustration of a susceptor configuration in accordance with another example of the present disclosure.
FIG. 5 is an illustration of a susceptor and hot melt adhesive combination in accordance with an example of the present disclosure.
FIG. 6 is an illustration of a component coupling system in accordance with an example of the present disclosure.

Reference will now be made to the exemplary embodiments illustrated, and specific language will be used herein to describe the same. It will nevertheless be understood that no limitation of the scope of the invention is thereby intended.

### DETAILED DESCRIPTION

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, "adjacent" refers to the proximity of two structures or elements. Particularly, elements that are identified as being "adjacent" may be either abutting or connected. Such elements may also be near or close to each other without necessarily contacting each other. The exact degree of proximity may in some cases depend on the specific context.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Although traditional coupling hardware or welding can be utilized to effectively couple components to one another, these are not without drawbacks. For example, using fasteners can increase part counts and assembly time and welding of metal or plastic typically requires machining processes to prepare interface surfaces for welding. Additionally, use of O-rings or other such joint seals usually requires machining operations to prepare sealing surface interfaces for the joint seals. Typical joining and coupling techniques can therefore increase complexity and expense due to the part counts, machining operations, and time involved. Thus, manufacturing and assembly processes for many devices can be improved by reducing part count and assembly time, and reducing or eliminating machining operations.

Accordingly, a method of coupling components utilizing electromagnetic energy is disclosed that can reduce part counts and assembly time compared to typical joining techniques, and eliminate expensive machining operations. In one aspect, the method can provide reliable and watertight joints. The method can include obtaining a first component having a first coupling portion, and obtaining a second component having a second coupling portion configured to mate or otherwise interface with the first coupling portion. The method can also include disposing a hot melt adhesive on at least one of the first and second coupling portions, and disposing a susceptor proximate the hot melt adhesive. The method can further include joining the first and second coupling portions. In addition, the method can include applying electromagnetic energy to the susceptor. The susceptor can convert the electromagnetic energy to heat, which melts the hot melt adhesive into contact with the first and second coupling portions to couple the first and second components to one another upon solidification of the hot melt adhesive.

In one aspect, a component prepared for coupling with another component utilizing electromagnetic energy is disclosed. The component can include a coupling portion configured to mate or otherwise interface with a coupling portion of another component for coupling the components to one another. The component can also include a hot melt adhesive disposed about the coupling portion. In addition, the component can include a susceptor proximate the hot melt adhesive. The susceptor can be configured to convert electromagnetic energy to heat to melt the hot melt adhesive into contact with the coupling portions to couple the components to one another upon solidification of the hot melt adhesive.

In one aspect, a component assembly is disclosed. The component assembly can include a first component having a first coupling portion. The component assembly can also include a second component having a second coupling portion configured to mate or otherwise interface with the first coupling portion for coupling the first and second components to one another. The component assembly can further include a hot melt adhesive disposed between the first and second coupling portions. Additionally, the component assembly can include a susceptor proximate the hot melt adhesive. The susceptor can convert electromagnetic energy to heat, which melts the hot melt adhesive into contact with the first and second coupling portions to couple the first and second components to one another upon solidification of the hot melt adhesive.

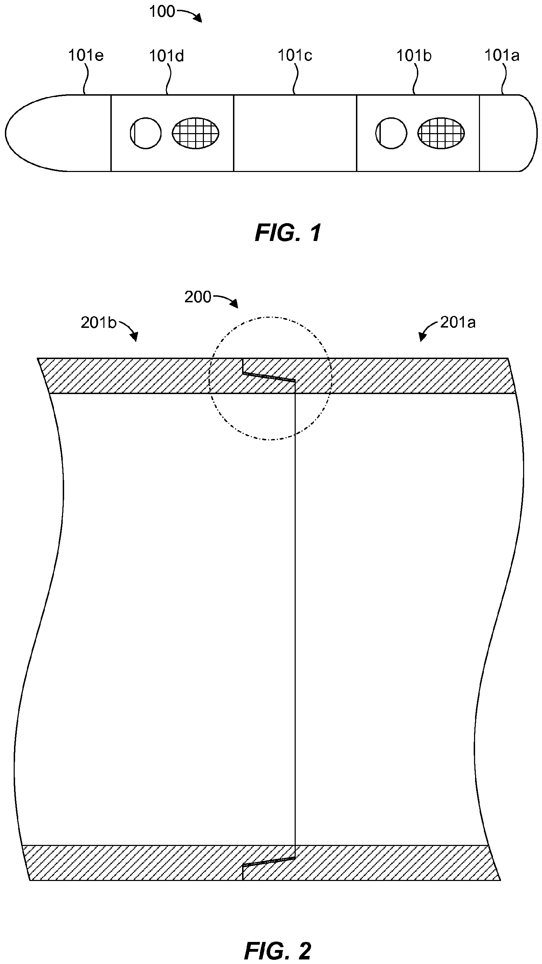

One example of a component assembly 100 is illustrated in FIG. 1. The component assembly 100 can comprise any number of components 101a-e coupled to one another. In one aspect, the components 101a-e of the component assembly 100 can form at least a portion of an unmanned underwater vehicle (UUV) (e.g., mine neutralizer), as shown, or any other suitable vehicle or device, such as a missile. Despite these examples, those skilled in the art will recognize the many different applications that this technology can be applied to, and that the examples identified herein are not meant to be limiting in any way. Essentially, those skilled in the art will recognize that the present invention technology can be applied in a variety of disciplines and to a variety of applications where components, typically constructed of polymeric materials, are to be coupled to one another.

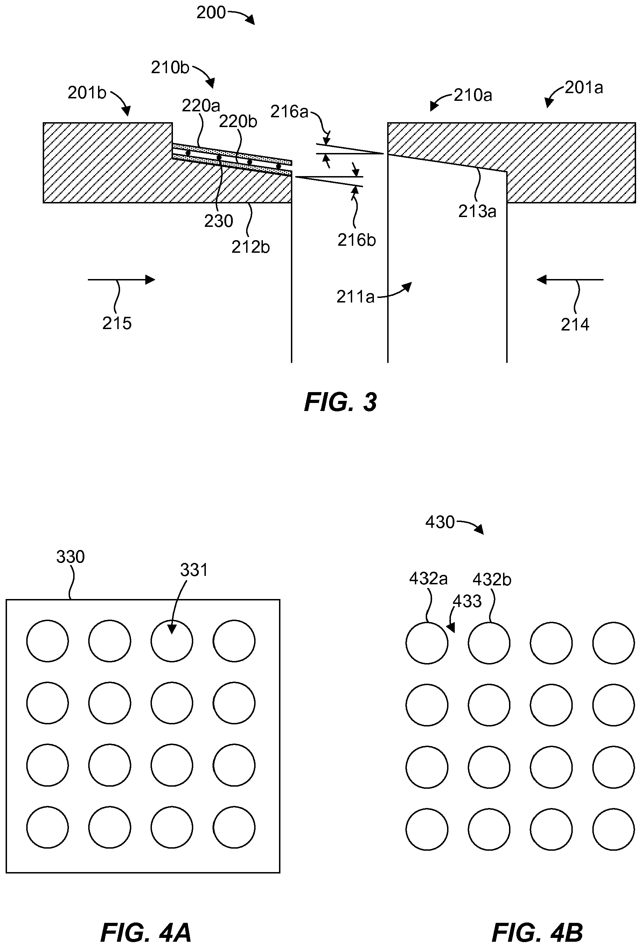

FIG. 2 is a schematic cross-sectional view of a coupling of two components 201a, 201b of a component assembly 200, for example as may be included in the UUV of FIG. 1. An exploded detailed view of the coupling is illustrated in FIG. 3, which shows various aspects of the component assembly prior to coupling. The components 201a, 201b can include features configured to facilitate coupling with one another. For example, the component 201a can have a coupling portion 210a and the component 201b can have coupling portion 210b configured to mate or otherwise interface with one another for coupling the components 201a, 201b. In one aspect, the coupling portion 210a can include an opening 211a defined by a flange 213a. In addition, the coupling portion 210b can include a protrusion 212b to be inserted into the opening 211a. In one aspect, one or both of the coupling portions 210a, 210b can be formed of a polymeric material. Although the components 201a, 201b and the coupling portions 210a, 210b are illustrated as having cylindrical configurations, the components 201a, 201b and the coupling portions 210a, 210b can be of any suitable configuration or geometry.

Furthermore, the components 201a, 201b can be formed or constructed in any suitable manner utilizing any suitable material. For example, the components 201a, 201b can comprise a polymeric combination lattice/casing structure.

The component assembly 200 can include a hot melt adhesive 220a, 220b disposed between the coupling portions 210a, 210b. In one aspect, the hot melt adhesive 220a, 220b can be disposed about a coupling portion, such as coupling portion 210b as shown in FIG. 3, prior to coupling the components 201a, 201b to one another. A hot melt adhesive is typically a form of thermoplastic adhesive. Suitable hot melt adhesives can include polyolefin hot melt adhesives, such as Scotch-Weld 3796 and 3789, Raychem S1030 or S1017, and others.

The component assembly 200 can also include a susceptor 230 proximate the hot melt adhesive 220a, 220b. The susceptor 230 can be configured to convert electromagnetic, such as radio frequency (RF) energy, to heat, which melts the hot melt adhesive into contact with the coupling portions 210a, 210b to couple the components 201a, 201b to one another upon solidification of the hot melt adhesive 220a, 220b. In other words, the susceptor 230 can be heated by its presence in an electromagnetic field (i.e., by absorbing electromagnetic energy) and can transfer heat to the surrounding hot melt adhesive 220a, 220b by thermal conduction and/or radiation to melt the adhesive, causing the adhesive to reflow and bond to the components 201a, 201b. The susceptor 230 can therefore provide internal heat generation for melting the adhesive 220a, 220b.

In one aspect, the susceptor 230 can be disposed proximate the hot melt adhesive 220a, 220b prior to disposing the hot melt adhesive on or between the coupling portions 210a, 210b. In another aspect, the susceptor 230 can be disposed between the hot melt adhesive layers 22a, 220b. Typically, the susceptor 230 will be made of a metallic material and/or a ferromagnetic material. In one aspect, the susceptor 230 can have high resistivity, which may be advantageous for induction heating. Suitable susceptor materials can include stainless steel, aluminum, molybdenum, niobium, silicon carbide, graphite, etc. In some cases where the component assembly 200 will be used in a water environment, stainless steel may be preferred as a susceptor material for its corrosion resistance if the susceptor happens to be exposed to water.

In one aspect, the flange 213a defining the opening 211a and the protrusion 212b can be tapered to generate axial compression between the coupling portions 210a, 210b. As opposed to an interface between non-tapered interface surfaces, the interface of the mated tapered flange 213a and protrusion 212b can generate axial compression in the joint as the coupling portions 210a, 210b are forced in opposite directions 214, 215, respectively, to sandwich the adhesive 220a, 220b. As a result, molten adhesive is forced into interstices or voids that may exist in or between the tapered mating surfaces to provide a fully sealed interface. This can ensure that melted adhesive flows into any irregular peaks and valleys in the surface finish of the joint interface of the coupling portions 210a, 210b, in this case, the surfaces of the flange 213a and the protrusion 212b. In one aspect, the opening 211a (and flange 213a) and the protrusion 212b can be configured as conical sections to provide tapered mating surfaces. Any suitable taper angles 216a, 216b for the flange 213a and the protrusion 212b, respectively, can be utilized, although the taper angles 216a, 216b and will typically be substantially the same for both components 201a, 201b.

In one aspect, the susceptor 230 can comprise a ring configuration and/or a coil configuration, as shown in FIG. 3. In a particular aspect, a susceptor in a ring or coil configuration can be disposed in one or more grooves or recesses configured to receive the ring or coil formed in the coupling portion 210a and/or the coupling portion 210b, such as along a tapered surface of the coupling portion 210a and/or the coupling portion 210b.

FIGS. 4A and 4B illustrate other examples of susceptor configurations. For example, as shown in FIG. 4A, a susceptor 330 can comprise a mesh or perforated configuration, where holes or openings 331 of any suitable shape can be formed, such as in a foil, to facilitate adhesive flow through the susceptor 330. In one example (not shown), a susceptor can have a solid configuration, which is similar to the mesh configuration of FIG. 4A, but without any holes or openings. One advantage of the mesh configuration of the susceptor 330 over a susceptor with a solid configuration is that the holes or openings 331 can become filled with adhesive, which can provide a superior bond (i.e., by increased bonding area) and which can reduce the chance of a leakage path forming along the susceptor.

In another example, shown in FIG. 4B, a susceptor 430 can comprise a patterned array configuration, where discrete susceptor portions 432a, 432b of any suitable shape can be disposed or deposited in an array or other suitable pattern to provide spaces or gaps 433 between the susceptor portions 432a, 432b. As with the holes or openings 331 of the susceptor 330, the spaces or gaps 433 between susceptor portions 432a, 432b can facilitate adhesive flow through the susceptor 430. In one example (not shown), susceptor portions can be disposed in a random manner such that spaces or gaps between susceptor portions varies throughout the susceptor. One advantage of discrete susceptor portions, such as in the susceptor 430, over a mesh or a solid configuration is that the separation of the susceptor portions by a space or gap can become filled with adhesive thereby separating the susceptor portions and avoiding a continuous path along the susceptor preventing the formation of a leakage path that may occur along a continuous susceptor, such as in a solid or a mesh susceptor configuration.

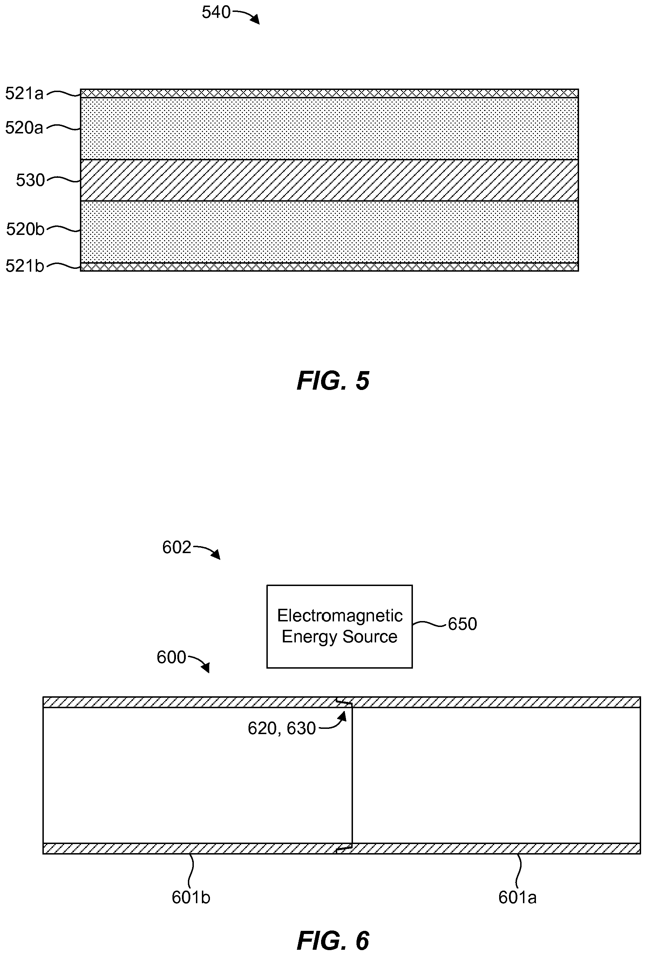

FIG. 5 illustrates a susceptor and hot melt adhesive combination 540 to facilitate coupling components to one another, as described herein. The susceptor and hot melt adhesive combination 540 can include a susceptor 530, which can be of any suitable configuration, such as disclosed hereinabove. The susceptor and hot melt adhesive combination 540 can also include one or more layers of hot melt adhesive 520a, 520b disposed proximate the susceptor 530. In one aspect, two or more layers of hot melt adhesive 520a, 520b can "sandwich" the susceptor 530, as shown in the figure. A removable backing 521a, 521b can be disposed on the hot melt adhesive 520a, 520b to protect the hot melt adhesive 520a, 520b prior to use. In one aspect, the backing 521a, 521b can shield a self-adhesive layer (not shown) on the hot melt adhesive 520a, 520b, which can be used to secure the susceptor and hot melt adhesive combination 540 to a component for coupling with another component. In one aspect, the susceptor and hot melt adhesive combination 540 can form a roll of "tape" that can facilitate storage of the combination 540 and application of the combination 540 to a component, such as by wrapping the tape around a coupling portion of a component and cutting the tape to length as needed.

FIG. 6 illustrates a component coupling system 602 in accordance with an example of the present disclosure. The system 602 can include components 601a, 601b to be coupled to one another to form a component assembly 600. The system 602 can also include hot melt adhesive 620 and a susceptor 630 disposed between the components 601a, 601b, as described hereinabove. In addition, the system 602 can include an electromagnetic energy source 650, such as an inductor, to generate an electromagnetic (e.g., RF) field and apply this to or about the component assembly 600.

In one aspect, the electromagnetic energy source 650 can be configured to radiate energy directed toward the susceptor 630 to melt the prepositioned hot melt adhesive 620 by heating the susceptor 630. In a particular aspect, the electromagnetic energy source 650 can be configured to include an inductor coil and the components 601a, 601b can fit within the coil, such that energy is radiated radially inward to melt the prepositioned hot melt adhesive 620. The intensity, duration, and/or location of the radiation can be tightly controlled to provide repeatable results. The electromagnetic energy source 650 can be configured to deliver exactly the energy required to a specific location. Material selections, thickness, and related composition, such as resistivity and conductivity, and/or other characteristics may also be taken into consideration.

In one aspect, because the components 601a, 601b are not welded or "fused" directly to one another, the components 601a, 601b can be separated without causing their destruction. In other words, it is the hot melt adhesive 620 that secures the components 601a, 601b to one another. Therefore, although the components 601a, 601b can be permanently coupled to one another, the adhesive 620 can be remelted by the application of electromagnetic energy to facilitate decoupling or separation of the components 601a, 601b. The components 601a, 601b can therefore be separated without damaging or destroying the parts, unlike other joining processes (i.e., welding) in which the components themselves are melted to "fuse" or secure one component to another. The components 601a, 601b can therefore be reused after the old adhesive and susceptor have been removed and replaced with fresh adhesive and a susceptor. Remelting the adhesive 620 to separate the components 601a, 601b is also likely to be faster than destructively separating the components 601a, 601b even if the components 601a, 601b are discarded.

Additionally, many manufacturing processes produce rough surface finishes that are not suitable for directly fusing typical components to one another. For example, when melting and directly fusing typical components to one another, the joint interface geometry should be true and parallel with little accommodation for surface irregularities. In the typical case, therefore, such components require machining of the interfaces to facilitate fusing or coupling with one another. The principles disclosed herein, however, can eliminate the need for machining of such interfaces because the components 601a, 601b are secured to one another with the hot melt adhesive 620, which can fill in and accommodate such surface irregularities. Thus, melting and reflowing the adhesive 620 can result in a homogenous adhesive bond between the components 601a, 601b. In addition, by flowing into surface voids, the adhesive 620 can effectively seal the joint formed by the components 601a, 601b, which can eliminate the need for traditional joint seals, such as O-rings. By eliminating the need for traditional sealing features, the need for secondary machining operations to provide sealing interfaces for the sealing features is also eliminated. Eliminating machining also eliminates the drawbacks associated with machining, such as cost, time, lead time, potential for damage to parts, and machining tolerance issues. Moreover, the primary reliability issue with UUVs constructed in the typical manner is failures of the seals. Elimination of sealing interfaces therefore eliminates a primary failure mode. Furthermore, coupling the components 601a, 601b, as disclosed herein, can eliminate the need for traditional coupling hardware, such as fasteners, which can reduce the number of parts required to construct the component assembly 600. The principles disclosed herein can therefore provide a reliable, watertight joint with a reduced part count and assembly time, and can eliminate expensive machining operations.

In accordance with one embodiment of the present invention, a method of coupling components utilizing electromagnetic energy is disclosed. The method can comprise obtaining a first component having a first coupling portion. The method can also comprise obtaining a second component having a second coupling portion configured to mate with the first coupling portion. The method can further comprise disposing a hot melt adhesive on at least one of the first and second coupling portions. The method can still further comprise disposing a susceptor proximate the hot melt adhesive. The method can even further comprise mating or otherwise interfacing the first and second coupling portions. Additionally, the method can comprise applying electromagnetic energy to the susceptor, wherein the susceptor converts the electromagnetic energy to heat, which melts the hot melt adhesive into contact with the first and second coupling portions to couple the first and second components to one another upon solidification of the hot melt adhesive. It is noted that no specific order is required in this method, though generally in one embodiment, these method steps can be carried out sequentially.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the foregoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A method of coupling components utilizing electromagnetic energy (650), comprising: obtaining a first component (201a) having a first coupling portion (210a) comprising a first tapered surface (213a); obtaining a second component (201b) having a second coupling portion (210b) configured to interface with the first coupling portion, and comprising a second tapered surface;
disposing a susceptor and hot melt adhesive combination (540) on at least one of the first or second tapered surfaces of the first and second coupling portions, the susceptor and hot melt adhesive combination (540) comprising a susceptor (230, 330, 430, 530, 630) disposed between a first hot melt adhesive layer (220a, 520a) and a second hot melt adhesive layer (220b, 520b);
mating the first and second coupling portions (210a, 210b) such that the susceptor and hot melt adhesive combination (540) is disposed between the first and second coupling portions (210a, 210b); and such that a portion of each of the first and second coupling portions (210a, 210b) are in direct contact with each other; and
applying electromagnetic energy (650) to the susceptor (230, 330, 430, 530, 630), wherein the susceptor (230, 330, 430, 530, 630) converts the electromagnetic energy (650) to heat, which melts the first and second hot melt adhesive layers (220a, 220b, 520a, 520b) into contact with the first and second coupling portions (210a, 210b) to couple the first and second components (201a, 201b) to one another upon solidification of the first and second hot melt adhesive layers (220a, 220b, 520a, 520b);
wherein the first coupling portion (210a) comprises an opening (211a) and the second coupling portion (210b) comprises a protrusion (212b);
wherein the opening (211a) and the protrusion (212b) are tapered to generate axial compression between the first and second coupling portions (210a, 201b); and
wherein the opening (211a) and the protrusion (212b) are configured as conical sections.

2. The method of claim 1, wherein the susceptor (230, 330, 430, 530, 630) comprises a ring configuration, a coil configuration, a mesh configuration, a solid configuration, a patterned array configuration, or combinations thereof.

3. The method of claim 1, wherein the susceptor (230, 330, 430, 530, 630) comprises a patterned array configuration comprising discrete susceptor portions having gaps between adjacent susceptor portions.

4. The method of claim 1, wherein electromagnetic energy (650) is applied by an inductor.

5. The method of claim 1, wherein the susceptor and hot melt adhesive combination (540) is formed prior to disposing the susceptor and hot melt adhesive combination (540) to one of the first and second coupling portions.

6. The method of claim 1, wherein at least one of the first coupling portion (210a) and the second coupling portion (210b) are formed of a polymeric material.

7. The method of claim 1, wherein the first and second coupling portions (201a, 201b) form at least a portion of an unmanned underwater vehicle (UUV) or a missile.

8. A component assembly (100, 200, 600), comprising:
a first component (201a) having a first coupling portion (210a) comprising a first tapered surface;
a second component (201b) having a second coupling portion (210b) configured to interface with the first coupling portion for coupling the first and second components to one another, and comprising a second tapered surface;
a susceptor and hot melt adhesive combination (540) disposed between the first and second tapered surfaces of the first and second coupling portions, the susceptor and hot melt adhesive combination (540) comprising a susceptor (230, 330, 430, 530, 630) disposed between a first hot melt adhesive layer (220a, 520a) and a second hot melt adhesive layer (220b, 520b),
the first and second coupling portions (210a, 210b) configured to mate such that the susceptor and hot melt adhesive combination (540) is disposed between the first and second coupling portions; and such that at least a portion of each of the first and second coupling portions (20a, 210b) are in direct contact with each other; and
wherein the susceptor (230, 330, 430, 530, 630) is configured to convert electromagnetic energy (650) to heat, to melt the first and second hot melt adhesive layers (220a, 220b, 520a, 520b) to couple the first and second components (201a, 201b) to one another upon solidification of the first and second hot melt adhesive layers (220a, 220b, 520a, 520b),
wherein the first coupling portion (210) comprises an opening (211a) and the second coupling portion (210b) comprises a protrusion (212b);
wherein the opening (211a) and the protrusion (212b) are tapered; and
wherein the opening (211a) and the protrusion (212b) are configured as conical sections.

9. The assembly (100, 200, 600) of claim 8, wherein the susceptor (230, 330, 430, 530, 630) comprises a ring configuration, a coil configuration, a mesh configuration, a solid configuration, a patterned array configuration, or combinations thereof and wherein the susceptor is sandwiched between the first hot melt adhesive layer and the second hot melt adhesive layer;.

10. The assembly (100, 200, 600) of claim 8, wherein the susceptor (230, 330, 430, 530, 630) comprises a patterned array configuration comprising discrete susceptor portions having gaps between.

11. The assembly (100, 200, 600) of claim 8, at least one of the first coupling portion (210a) and the second coupling portion (210b) are formed of a polymeric material.

12. The assembly (100, 200, 600) of claim 8, wherein the first and second coupling portions (201a, 201b) form at least a portion of an unmanned underwater vehicle (UUV) or a missile.

## Patentansprüche

1. Verfahren zum Koppeln von Komponenten mittels elektromagnetischer Energie (650), Folgendes umfassend:
Erhalten einer ersten Komponente (201a) mit einem ersten Kopplungsabschnitt (210a), der eine erste sich verjüngende Oberfläche (213a) umfasst;
Erhalten einer zweiten Komponente (201b) mit einem zweiten Kopplungsabschnitt (210b), der so konfiguriert ist, dass er mit dem ersten Kopplungsabschnitt zusammenwirkt, und eine zweite sich verjüngende Oberfläche umfasst;
Anordnen einer Suszeptor- und Schmelzklebstoffkombination (540) auf mindestens einer der ersten oder zweiten sich verjüngenden Oberfläche des ersten und zweiten Kopplungsabschnitts, wobei die Suszeptor- und Schmelzklebstoffkombination (540) einen Suszeptor (230, 330, 430, 530, 630) umfasst, der zwischen einer ersten Schmelzklebstoffschicht (220a, 520a) und einer zweiten Schmelzklebstoffschicht (220b, 520b) angeordnet ist;
Zusammenfügen des ersten und zweiten Kopplungsabschnitts (210a, 210b), so dass die Suszeptor- und Schmelzklebstoffkombination (540) zwischen dem ersten und zweiten Kopplungsabschnitt (210a, 210b) angeordnet ist; und
so, dass jeweils ein Abschnitt des ersten und des zweiten Kopplungsabschnitts (210a, 210b) in direktem Kontakt miteinander stehen; und
Anlegen von elektromagnetischer Energie (650) an den Suszeptor (230, 330, 430, 530, 630), wobei der Suszeptor (230, 330, 430, 530, 630) die elektromagnetische Energie (650) in Wärme umwandelt, die die erste und zweite Schmelzklebstoffschicht (220a, 220b, 520a, 520b) in Kontakt mit dem ersten und dem zweiten Kopplungsabschnitt (210a, 210b) schmilzt, um die erste und die zweite Komponente (201a, 201b) nach Verfestigung der ersten und der zweiten Schmelzklebstoffschicht (220a, 220b, 520a, 520b) miteinander zu koppeln;
wobei der erste Kopplungsabschnitt (210a) eine Öffnung (211a) und der zweite Kopplungsabschnitt (210b) einen Vorsprung (212b) umfasst;
wobei die Öffnung (211a) und der Vorsprung (212b) verjüngt sind, um eine axiale Kompression zwischen dem ersten und dem zweiten Kopplungsabschnitt (210a, 201b) zu erzeugen; und
wobei die Öffnung (211a) und der Vorsprung (212b) als konische Abschnitte konfiguriert sind.

2. Verfahren nach Anspruch 1, wobei der Suszeptor (230, 330, 430, 530, 630) eine Ringkonfiguration, eine Spulenkonfiguration, eine Maschenkonfiguration, eine Festkörperkonfiguration, eine gemusterte Matrixkonfiguration oder Kombinationen davon umfasst.

3. Verfahren nach Anspruch 1, wobei der Suszeptor (230, 330, 430, 530, 630) eine gemusterte Matrixkonfiguration umfasst, die diskrete Suszeptorabschnitte mit Lücken zwischen benachbarten Suszeptorabschnitten umfasst.

4. Verfahren nach Anspruch 1, wobei elektromagnetische Energie (650) durch einen Induktor angelegt wird.

5. Verfahren nach Anspruch 1, wobei die Suszeptor- und Schmelzklebstoffkombination (540) vor dem Anordnen der Suszeptor- und Schmelzklebstoffkombination (540) auf den ersten oder zweiten Kopplungsabschnitt gebildet wird.

6. Verfahren nach Anspruch 1, wobei der erste Kopplungsabschnitt (210a) und/oder der zweite Kopplungsabschnitt (210b) aus einem polymeren Material gebildet sind.

7. Verfahren nach Anspruch 1, wobei der erste und der zweite Kopplungsabschnitt (201a, 201b) mindestens einen Abschnitt eines unbemannten Unterwasserfahrzeugs (UUV) oder einer Rakete bilden.

8. Komponentenanordnung (100, 200, 600), umfassend:
eine erste Komponente (201a) mit einem ersten Kopplungsabschnitt (210a), umfassend eine erste sich verjüngende Oberfläche;
eine zweite Komponente (201b) mit einem zweiten Kopplungsabschnitt (210b), der so konfiguriert ist, dass er mit dem ersten Kopplungsabschnitt zusammenwirkt, um die erste und die zweite Komponente miteinander zu koppeln, und eine zweite sich verjüngende Oberfläche umfasst;
eine Suszeptor- und Schmelzklebstoffkombination (540), die zwischen der ersten und der zweiten sich verjüngenden Oberfläche des ersten und des zweiten Kopplungsabschnitts angeordnet ist, wobei die Suszeptor- und Schmelzklebstoffkombination (540) einen Suszeptor (230, 330, 430, 530, 630) umfasst, der zwischen einer ersten Schmelzklebstoffschicht (220a, 520a) und einer zweiten Schmelzklebstoffschicht (220b, 520b) angeordnet ist, wobei der erste und der zweite Kopplungsabschnitt (210a, 210b) so konfiguriert sind, dass sie so zusammenpassen, dass die Suszeptor und Schmelzklebstoffkombination (540) zwischen dem ersten und dem zweiten Kopplungsabschnitt angeordnet ist; und
so, dass jeweils mindestens ein Abschnitt des ersten und des zweiten Kopplungsabschnitts (20a, 210b) in direktem Kontakt miteinander stehen; und
wobei der Suszeptor (230, 330, 430, 530, 630) so konfiguriert ist, dass er elektromagnetische Energie (650) in Wärme umwandelt, um die erste und zweite Schmelzklebstoffschicht (220a, 220b, 520a, 520b) zu schmelzen, um die erste und zweite Komponente (201a, 201b) bei der Verfestigung der ersten und zweiten Schmelzklebstoffschicht (220a, 220b, 520a, 520b) zu koppeln, wobei der erste Kopplungsabschnitt (210) eine Öffnung (211a) umfasst und der zweite Kopplungsabschnitt (210b) einen Vorsprung (212b) umfasst;
wobei die Öffnung (211a) und der Vorsprung (212b) verjüngt sind; und
wobei die Öffnung (211a) und der Vorsprung (212b) als konische Abschnitte konfiguriert sind.

9. Anordnung (100, 200, 600) nach Anspruch 8, wobei der Suszeptor (230, 330, 430, 530, 630) eine Ringkonfiguration, eine Spulenkonfiguration, eine Maschenkonfiguration, eine Festkörperkonfiguration, eine gemusterte Matrixkonfiguration oder Kombinationen davon umfasst und wobei der Suszeptor sandwichartig zwischen der ersten Schmelzklebstoffschicht und der zweiten Schmelzklebstoffschicht angeordnet ist.

10. Anordnung (100, 200, 600) nach Anspruch 8, wobei der Suszeptor (230, 330, 430, 530, 630) eine gemusterte Matrixkonfiguration umfasst, die diskrete Suszeptorabschnitte mit dazwischenliegenden Lücken umfasst.

11. Anordnung (100, 200, 600) nach Anspruch 8, wobei der erste Kopplungsabschnitt (210a) und/oder der zweite Kopplungsabschnitt (210b) aus einem polymeren Material gebildet ist.

12. Anordnung (100, 200, 600) nach Anspruch 8, wobei der erste und der zweite Kopplungsabschnitt (201a, 201b) mindestens einen Abschnitt eines unbemannten Unterwasserfahrzeugs (UUV) oder einer Rakete bilden.

## Revendications

1. Procédé d'accouplage de composants à l'aide d'énergie électromagnétique (650), comprenant : l'obtention d'un premier composant (201a) présentant une première partie d'accouplage (210a) comprenant une première surface effilée (213a) ; l'obtention d'un second composant (201b) présentant une seconde partie d'accouplage (210b) conçue pour assurer l'interface avec la première partie d'accouplage et comprenant une seconde surface effilée ;
la disposition d'une combinaison suscepteur et adhésif thermofusible (540) sur la première et/ou la seconde surface effilée des première et seconde parties d'accouplage, la combinaison suscepteur et adhésif thermofusible (540) comprenant un suscepteur (230, 330, 430, 530, 630) disposé entre une première couche adhésive thermofusible (220a, 520a) et une seconde couche adhésive thermofusible (220b, 520b) ;
l'assemblage des première et seconde parties d'accouplage (210a, 210b) de telle sorte que la combinaison suscepteur et adhésif thermofusible (540) est disposée entre les première et seconde parties d'accouplage (210a, 210b) ; et de telle sorte qu'une partie de chacune des première et seconde parties d'accouplage (210a, 210b) est en contact direct l'une avec l'autre ; et
l'application d'énergie électromagnétique (650) au suscepteur (230, 330, 430, 530, 630), dans lequel le suscepteur (230, 330, 430, 530, 630) convertit l'énergie électromagnétique (650) en chaleur, qui fait fondre les première et seconde couches adhésives thermofusibles (220a, 220b, 520a, 520b) en contact avec les première et seconde parties d'accouplage (210a, 210b) pour accoupler les premier et second composants (201a, 201b) l'un à l'autre lors de la solidification des première et seconde couches adhésives thermofusibles (220a, 220b, 520a, 520b) ;
dans lequel la première partie d'accouplage (210a) comprend une ouverture (211a) et la seconde partie d'accouplage (210b) comprend une saillie (212b) ;
dans lequel l'ouverture (211a) et la saillie (212b) sont effilées pour générer une compression axiale entre les première et seconde parties d'accouplage (210a, 201b) ; et
dans lequel l'ouverture (211a) et la saillie (212b) sont conçues sous la forme de sections coniques.

2. Procédé selon la revendication 1, dans lequel le suscepteur (230, 330, 430, 530, 630) comprend une configuration en anneau, une configuration en bobine, une configuration à maillage, une configuration solide, une configuration de réseau à motifs ou des combinaisons de celles-ci.

3. Procédé selon la revendication 1, dans lequel le suscepteur (230, 330, 430, 530, 630) comprend une configuration de réseau à motifs comprenant des parties de suscepteur distinctes présentant des espaces entre des parties de suscepteur adjacentes.

4. Procédé selon la revendication 1, dans lequel de l'énergie électromagnétique (650) est appliquée par un inducteur.

5. Procédé selon la revendication 1, dans lequel la combinaison suscepteur et adhésif thermofusible (540) est formée avant la disposition de la combinaison suscepteur et adhésif thermofusible (540) sur la première ou la seconde partie d'accouplage.

6. Procédé selon la revendication 1, dans lequel la première partie d'accouplage (210a) et/ou la seconde partie d'accouplage (210b) est formée d'un matériau polymère.

7. Procédé selon la revendication 1, dans lequel les première et seconde parties d'accouplage (201a, 201b) forment au moins une partie d'un véhicule sous-marin sans équipage (VSSE) ou d'un missile.

8. Ensemble composants (100, 200, 600), comprenant :
un premier composant (201a) présentant une première partie d'accouplage (210a) comprenant une première surface effilée ;
un second composant (201b) présentant une seconde partie d'accouplage (210b) conçue pour assurer l'interface avec la première partie d'accouplage destinée à l'accouplage des premier et second composants l'un à l'autre et comprenant une seconde surface effilée ;
une combinaison suscepteur et adhésif thermofusible (540) disposée entre les première et seconde surfaces effilée des première et seconde parties d'accouplage, la combinaison suscepteur et adhésif thermofusible (540) comprenant un suscepteur (230, 330, 430, 530, 630) disposé entre une première couche adhésive thermofusible (220a, 520a) et une seconde couche adhésive thermofusible (220b, 520b), les première et seconde parties d'accouplage (210a, 210b) conçues pour s'assembler de telle sorte que la combinaison suscepteur et adhésif thermofusible (540) est disposée entre les première et seconde parties d'accouplage ; et de telle sorte qu'au moins une partie de chacune des première et seconde parties d'accouplage (20a, 210b) est en contact direct l'une avec l'autre ; et
dans lequel le suscepteur (230, 330, 430, 530, 630) est conçu pour convertir de l'énergie électromagnétique (650) en chaleur, faire fondre les première et seconde couches adhésives thermofusibles (220a, 220b, 520a, 520b) pour accoupler les premier et second composants (201a, 201b) l'un à l'autre lors de la solidification des première et seconde couches adhésives thermofusibles (220a, 220b, 520a, 520b), dans lequel la première partie d'accouplage (210) comprend une ouverture (211a) et la seconde partie d'accouplage (210b) comprend une saillie (212b) ;
dans lequel l'ouverture (211a) et la saillie (212b) sont effilées ; et
dans lequel l'ouverture (211a) et la saillie (212b) sont conçues sous la forme de sections coniques.

9. Ensemble (100, 200, 600) selon la revendication 8, dans lequel le suscepteur (230, 330, 430, 530, 630) comprend une configuration en anneau, une configuration en bobine, une configuration à maillage, une configuration solide, une configuration de réseau à motifs, ou des combinaisons de celles-ci et dans lequel le suscepteur est intercalé entre la première couche adhésive thermofusible et la seconde couche adhésive thermofusible.

10. Ensemble (100, 200, 600) selon la revendication 8, dans lequel le suscepteur (230, 330, 430, 530, 630) comprend une configuration de réseau à motifs comprenant des parties de suscepteur distinctes présentant des espaces entre elles.

11. Ensemble (100, 200, 600) selon la revendication 8, la première partie d'accouplage (210a) et/ou la seconde partie d'accouplage (210b) est formée d'un matériau polymère.

12. Ensemble (100, 200, 600) selon la revendication 8, dans lequel les première et seconde parties d'accouplage (201a, 201b) forment au moins une partie d'un véhicule sous-marin sans équipage (VSSE) ou d'un missile.
